# EUROPÄISCHE PATENTANMELDUNG

(11) **EP 1 099 598 A2**
(43) Veröffentlichungstag der Anmeldung: **16.05.2001**
(21) Anmeldenummer: 00124615.6
(22) Anmeldetag: 10.11.2000
(51) Int. Cl.: B60P 3/20

(54) **Platte für Klima- und Schmutz**

(30) Priorität: 11.11.1999 DE 29919882 U
(71) Anmelder: Steen, Manfred, 27211 Bassum (DE)
(72) Erfinder: Steen, Manfred, 27211 Bassum (DE)
(74) Vertreter: Eisenführ, Speiser & Partner

(57) **Zusammenfassung**

Die Erfindung betrifft eine Klima- und Schmutzschleuse für Laderäume, insbesondere für Kühl-Lkw. Erfindungsgemäß wird vorgeschlagen, daß ein Schleusentor an mindestens einer im Laderaum angebrachten, abnehmbaren Stange abnehmbar befestigt ist und die Öffnung des Laderaums verschließt.

## Beschreibung

Die Erfindung betrifft eine Klima- und Schmutzschleuse für Laderäume, insbesondere Lastkraftwagen oder Containern.

Beim Transport von gekühlten Lebensmitteln, wie beispielsweise Schweine- oder Rinderhälften, sind die hygienischen Bedingungen von großer Bedeutung. Der Verbraucher erwartet, daß die Lebensmittel in einem einwandfreien Zustand zu ihm gelangen. Dabei ist es wichtig, daß die Lebensmittel beim Transport sowie beim Ein- und Ausladen gekühlt gelagert werden.

Es ist bekannt, Plastiklamellen an der Öffnung des Laderaums anzubringen, die von der Decke auf den Boden herunterhängen. Dadurch soll vermieden werden, daß warme Luft von außen in den Laderaum eindringen kann. Diese bekannte Lamellenvorrichtung bietet jedoch keinen hinreichenden Schutz vor Wärmeschwankungen bzw. Schmutz, da sie auch nicht annähernd luftdicht ist. Außerdem sind die Lamellen beim Ein- und Ausladen hinderlich.

Der Erfindung liegt das Problem zugrunde, eine verbesserte Klima- und Schmutzschleuse für Laderäume vorzusehen.

Dieses Problem wird durch eine Schleuse gelöst, die ein Schleusentor aufweist, das die Öffnung des Laderaums verschließt und das an mindestens einer zwischen den Seitenwänden des Laderaums angebrachten, abnehmbaren Stange abnehmbar befestigt ist.

Die mit der Erfindung erzielten Vorteile bestehen insbesondere darin, daß die Öffnung des Laderaums im wesentlichen schmutzdicht verschlossen wird, wobei das Schleusentor an Stangen befestigt wird, was zu einer Stabilisierung des Schleusentors führt. Ferner kann das Schleusentor schnell und einfach angebracht und zum Be- und Entladen leicht entfernt werden.

Eine vorteilhafte Ausgestaltung der Erfindung sieht vor, daß das Schleusentor aus mehreren separaten Platten aufgebaut ist, die nebeneinander an der bzw. den Stangen angebracht sind, was zu einer Verbesserung der Hantierbarkeit des Schleusentores führt.

Eine weitere Ausgestaltung der Erfindung sieht vor, daß mindestens zwei Stangen horizontal zwischen den Seitenwänden des Laderaums abnehmbar befestigt sind. Dies ermöglicht eine bessere Befestigung des Schleusentors an den Stangen.

Eine besonders bevorzugte Ausgestaltung der Erfindung sieht mindestens zwei Befestigungseinrichtungen auf der dem Laderaum zugewandten Seite der Platte vor, wobei eine erste, auf der Höhe der ersten Stange befindliche Befestigungseinrichtung in Wirkeingriff mit der ersten Stange gelangt und wobei eine zweite auf der Höhe der zweiten Stange befindliche Befestigungseinrichtung in Wirkeingriff mit der zweiten Stange gelangt. Auf diese Weise können die Platten des Schleusentors von außen in einfacher Weise gegen die Stangen gedrückt und mittels der Befestigungseinrichtungen dann an den Stangen festgeklemmt, eingehängt oder anderweitig angedrückt und an den Stangen befestigt werden. Ein Anbringen bzw. ein Entfernen des Schleusentors wird dadurch sehr erleichtert und vereinfacht.

Eine weitere besonders bevorzugte Ausgestaltung der Erfindung sieht vor, daß Griffe auf der dem Laderaum abgewandten Seite angeordnet sind, damit die Platten leicht von außen angefaßt und entfernt bzw. angebracht werden können.

Gemäß einer weiteren Ausgestaltung der Erfindung sind die Befestigungseinrichtungen als Hakenelemente oder Rastelemente ausgebildet, wobei die Hakenelemente in den Stangen eingehakt werden und die Rastelemente in die Stangen eingerastet werden können. Diese Befestigungseinrichtungen dienen der einfachen abnehmbaren Befestigung der Platten an den Stangen.

Eine weitere besonders bevorzugte Ausgestaltung der Erfindung sieht vor, daß je ein Griff und eine Befestigungseinrichtung einstückig in Ausnehmungen in der Platte eingelassen sind, und daß die beiden auf den Stangen aufgesteckten Platten genau mit den Innenseiten der geschlossenen Lkw-Außentüren abschließen.

Eine weitere Ausgestaltung der Erfindung sieht vor, daß die Platten mit einer an ihrem Umfang insgesamt oder abschnittweise umlaufenden Dichtung, beispielsweise einer Gummilippe versehen sind, wodurch die Luftdichtigkeit der Schleuse wesentlich verbessert wird.

Eine weitere besonders bevorzugte Ausgestaltung der Erfindung sieht vor, daß an den Seitenwänden des Laderaums Halterungen für die Stangen vorgesehen sind. Die Halterungen sind vorteilhafterweise als Schienen ausgebildet, die horizontal entlang des Laderaums angebracht sind und eine Befestigung der Stangen vorgesehen sein können.

Eine Ausführungsform der Erfindung ist in der Zeichnung dargestellt und wird im folgenden näher beschrieben. Es zeigen:
- Figur 1: den Laderaum eines Lkw von hinten gesehen, mit offener Außentür und einer erfindungsgemäßen Schleuse;
- Figur 2a bis 2d: jeweils erste und zweite Griffe und Befestigungseinrichtungen, in den Platten des Schleusentores.

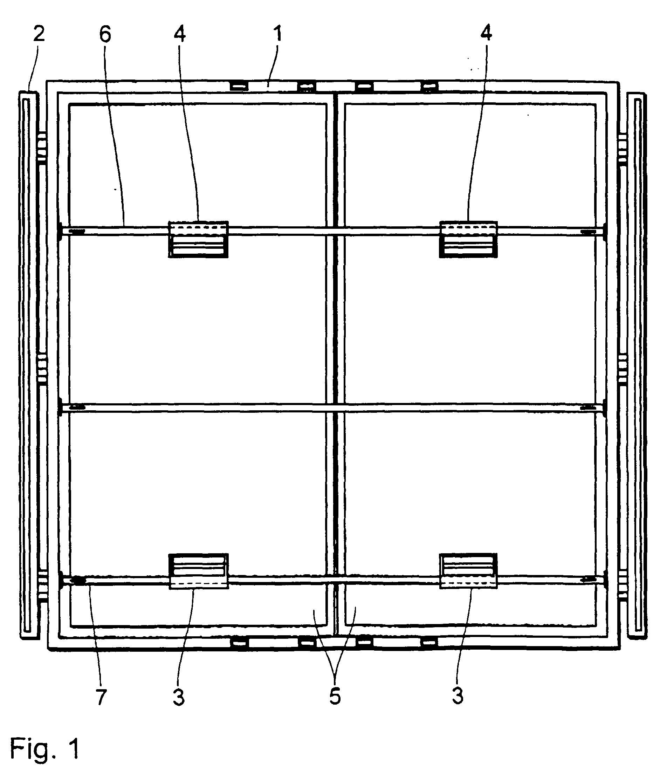

In Figur 1 ist die Rückseite eines Laderaums, beispielsweise eines Lkw, gezeigt. Dabei sind Außentüren 2 jeweils geöffnet und Platten 5 des Schleusentores sind sichtbar. In den Platten 5 sind jeweils ein erster Griff 3 und ein zweiter Griff 4 vorgesehen. Die Platten 5 verschließen die Öffnung des Laderaums. Auf der dem Laderaum zugewandten Seite der Platten befinden sich eine erste Stange 7 und eine zweite Stange 6 auf der Höhe des ersten Griffs 4 und des zweiten Griffs 4.

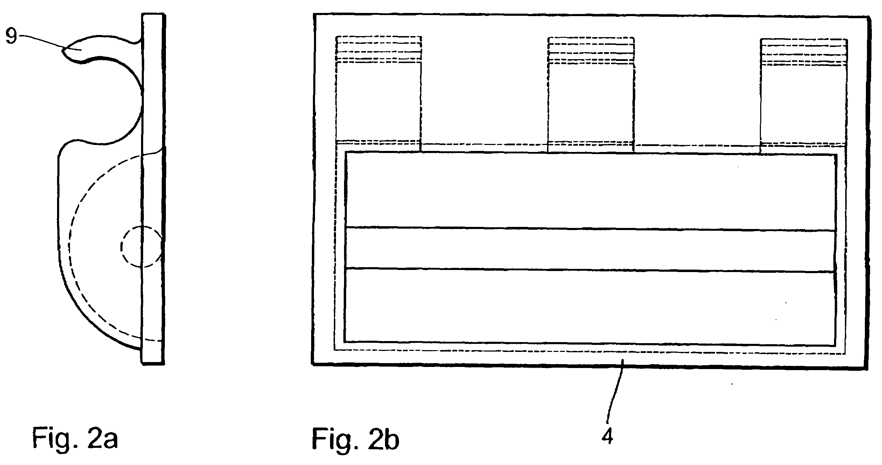

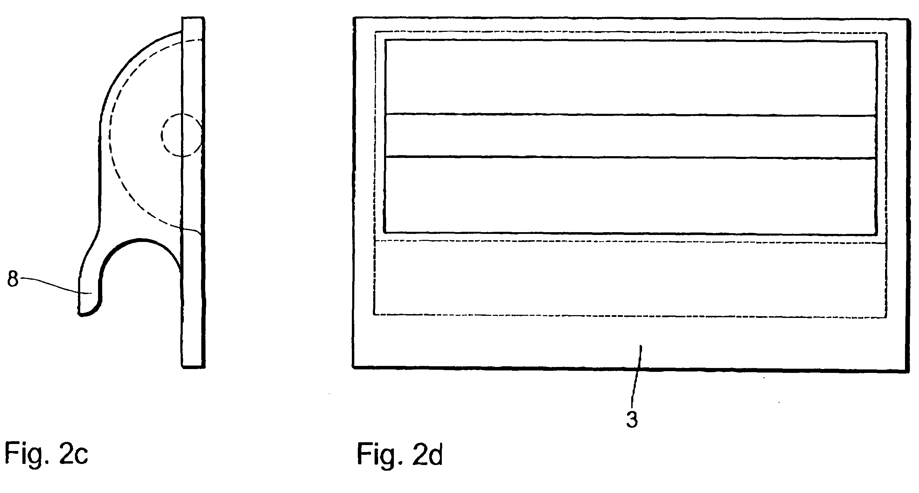

In den Figuren 2a bis 2d sind erste und zweite Hakenelemente 8, 9 dargestellt. Diese Hakenelemente 8, 9 sind jeweils einstückig mit einem Griff 3 bzw. 4 ausgestaltet. Sowohl das erste Hakenelement 8 als auch das zweite Hakenelement 9 sind jeweils in Ausnehmungen der Platten 5 des Schleusentores eingelassen.

Zum Schließen des Schleusentores wird eine Platte an der ersten und zweiten Stange 6, 7 befestigt, indem zunächst das erste Hakenelement 8 in die erste Stange 7 und dann das zweite Hakenelement 9 in die zweite Stange 6 eingehakt wird. Die nächste Platte wird gleichermaßen an die Stangen 6, 7 befestigt.

Die Stangen 6, 7 sind als schienenförmige Halterungen ausgebildet. Diese Schienen sind horizontal in Längsrichtung an den Seitenwänden des Laderaums angebracht. Die Stangen 6, 7 sind abnehmbar an den Halterungen befestigt. Beim Beund Entladen des Laderaums können die Stangen 6, 7 entfernt werden, damit der Laderaum betreten werden kann.

Die Halterungen für die Stangen 6, 7, die Stangen und die Dicke der Platten 5 sind derart dimensioniert, daß die Platten 5 mit den geschlossenen Außentüren 2 abschließen. Dabei ist es wichtig, daß der erste Griff 3 und der zweite Griff 4 in die Platte eingelassen sind, damit kein Zwischenraum zwischen der geschlosssenen Außentür und den Platten 5 vorhanden ist. So wird gewährleistet, daß die Platten selbst bei einem Verrutschen der Ladung nicht beschädigt werden.

Da die Halterungen der Stangen als Schienen horizontal entlang den Seitenwänden des Laderaums angebracht sind, ist es ebenfalls möglich, die Stangen und somit die Platten an einer beliebigen Position in dem Laderaum anzubringen. Dadurch kann der Laderaum verkleinert werden, wenn z.B. nur ein Teil des Laderaums benötigt wird. Dies hat den Vorteil, daß nicht der gesamte Laderaum, sondern nur ein Teil davon gekühlt werden muß, was einen geringeren Energieverbrauch zur Folge hat.

Damit die Platten 5 den Laderaum im wesentlichen dicht abschließen können, sind Dichtungen, beispielsweise Gummilippen, an dem Umfang der Platten vorgesehen.

Das Schleusentor entfaltet insbesondere dann seine Vorteile, wenn ein Lkw zum Be- oder Entladen an einer Andockstation zurücksetzt. Die Andockstation ist üblicherweise als hermetische Schleuse ausgeführt, damit keine warme Luft und kein Schmutz in die Lagerräume eines Kühlhauses eindringen können. Da die Außentüren 2 eines Lkw sich lediglich nach außen hin öffnen lassen, müssen die Türen geöffnet werden, bevor der Lkw an die Andockschleuse zurücksetzen kann. Durch das erfindungsgemäße Schleusentor wird verhindert, daß auf den letzten Metern Schmutz wie beispielsweise Abgase und warme Luft in den Laderaum des Lkw eindringen und die darin befindlichen Lebensmittel beeinträchtigen können.

Ein weiterer Vorteil, der durch die horizontal ansetzbaren und befestigbaren Stangen realisiert wird, ist das Verhindern des Verrutschens eines Teils der Ladung, was inbesondere beim Öffnen der Außentüren gefährlich sein kann, da sich während der Fahrt ein Teil der Ladung gelöst haben und gegen die Platten drücken kann.

## Patentansprüche

1. Klima- und Schmutzschleuse für Laderäume, insbesondere für Kühl-Lkw, dadurch gekennzeichnet, daß ein Schleusentor an mindestens einer im Laderaum angebrachten, abnehmbaren Stange abnehmbar befestigt ist und die Öffnung des Laderaums verschließt.

2. Schleuse nach Anspruch 1,
dadurch gekennzeichnet, daß die Stange zwischen den Seitenwänden des Laderaums abnehmbar befestigt ist.

3. Schleuse nach Anspruch 1 oder 2,
dadurch gekennzeichnet, daß das Schleusentor aus einer oder mehreren Platten besteht, welche die Öffnung des Laderaums verschließen.

4. Schleuse nach Anspruch 3,
dadurch gekennzeichnet, daß mindestens eine erste und zweite Stange horizontal zwischen den Seitenwänden des Laderaums abnehmbar befestigt sind.

5. Schleuse nach Anspruch 4,
gekennzeichnet durch mindestens zwei Befestigungseinrichtungen auf der dem Laderaum zugewandten Seite der Platte,
wobei eine erste auf der Höhe der ersten Stange befindliche Befestigungseinrichtung in Wirkeingriff mit der ersten Stange gelangt, und wobei eine zweite auf der Höhe der zweiten Stange befindliche Befestigungseinrichtung in Wirkeingriff mit der zweiten Stange gelangt.

6. Schleuse nach Anspruch 5,
dadurch gekennzeichnet, daß Griffe auf der dem Laderaum abgewandten Seite angeordnet sind.

7. Schleuse nach Anspruch 5 oder 6,
dadurch gekennzeichnet, daß die Befestigungseinrichtungen Hakenelemente darstellen, die in die Stangen eingehakt werden.

8. Schleuse nach Anspruch 5 oder 6,
dadurch gekennzeichnet, daß die Befestigungseinrichtungen Rastelemente darstellen, die in die Stangen eingerastet werden.

9. Schleuse nach Anspruch 6,
dadurch gekennzeichnet, daß der erste Griff und die erste Befestigungseinrichtung sowie der zweite Griff und die zweite Befestigungseinrichtung je einstückig in Ausnehmungen in die Platte eingelassen sind.

10. Schleuse nach einem der vorherigen Ansprüchen,
dadurch gekennzeichnet, daß die beiden auf den Stangen aufgesteckten Platten genau mit den Innenseiten der geschlossenen Lkw-Außentüren abschließen.

11. Schleuse nach einem der vorherigen Ansprüche,
dadurch gekennzeichnet, daß die Platten an ihrem Umfang eine ganz oder abschnittsweise umlaufende Dichtung, beispielsweise eine Gummilippe, aufweisen.

12. Schleuse nach einem der vorherigen Ansprüche,
dadurch gekennzeichnet, daß an den Seitenwänden des Laderaums Halterungen für die Stangen vorgesehen sind.

13. Schleuse nach Anspruch 12,
dadurch gekennzeichnet, daß die Halterungen als Schienen horizontal entlang den Seitenwänden des Laderaums ausgebildet sind.
